# EUROPÄISCHE PATENTSCHRIFT

(11) **EP 1 882 506 B1**
(45) Veröffentlichungstag und Bekanntmachung des Hinweises auf die Patenterteilung: **12.05.2010**
(21) Anmeldenummer: 07112993.6
(22) Anmeldetag: 24.07.2007
(51) Int. Cl.: B01D 3/30, B01D 3/00

(54) **Eintrittseinrichtung für ein tangential in einen Apparat eingespeistes Fluid**
An inlet device for a fluid fed tangentially into an apparatus
Dispositif d'introduction tangentielle d'un fluide dans un appareil

(30) Priorität: 27.07.2006 EP 06117972
(43) Veröffentlichungstag der Anmeldung: 30.01.2008
(73) Patentinhaber: Sulzer Chemtech AG, 8404 Winterthur (CH)
(72) Erfinder: Muggli, Felix, 8413 Neftenbach (CH); Schaeffer, Pierre, 8409 Winterthur (CH); Ghelfi, Lorenzo, 8610 Uster (CH)
(74) Vertreter: Sulzer Management AG

(56) Entgegenhaltungen:
- EP-A- 1 279 428
- US-A- 4 315 815
- US-A- 4 336 228
- US-A- 4 714 542
- US-A1- 2003 188 851

## Beschreibung

Die Erfindung betrifft eine Eintrittseinrichtung für ein tangential in einen Apparat eingespeistes Fluid gemäss Oberbegriff von Anspruch 1, wobei der Apparat insbesondere eine Kolonne ist. Sie bezieht sich auch auf einen Apparat mit der erfindungsgemässen Eintrittseinrichtung sowie auf eine Verwendung der Eintrittseinrichtung.

Aus der EP-A- 1 588 749 (= P.7446) ist eine Fluideintrittseinrichtung, nämlich eine Einlass- und Verteileinrichtung für ein Flüssigkeits/Dampf-Gemisch bekannt, mit der ein solches zweiphasiges Fluid in einen Apparat, insbesondere eine Kolonne, eingespeist werden kann, wobei gleichzeitig eine im Fluid mitgeführte Flüssigkeit (in Form von Tröpfchen) abscheidbar ist.

Ein hornförmiger Kanal umfasst gekrümmte Leitlamellen zwischen zwei Wänden, die horizontal ausgerichtet und an die Peripherie des Apparats anstossend angeordnet sind. Ein tangential einströmendes Fluid wird durch die Leitlamellen in eine Mehrzahl von Teilströmen verzweigt, die durch die Leitlamellen umgelenkt werden, so dass eine dichtere Phase des Fluids unter Nutzung von Zentrifugalkräften zumindest teilweise abgeschieden werden kann. Mit dieser Fluideintrittseinrichtung wird der Dampf über den Querschnitt des Apparats verteilt, während Flüssigkeit an den Leitlamellen und der Wand des Apparats abgeschieden wird. Diese bekannte hornförmige Fluideintrittseinrichtung kann selbstverständlich auch zum Einspeisen eines einphasigen Fluids (Flüssigkeit oder Gas) verwendet werden.

Die Teilströme vereinigen sich zu einem Wirbel, der eine relativ gleichmässige Strömung bildet, aus der das Fluid beispielsweise in eine über der Fluideintrittseinrichtung angeordnete Packung verteilt wird. Statt der Packung können auch andere Einbauten im Apparat oder in der Kolonne vorgesehen sein, beispielsweise Trennböden oder eine Einrichtung zum Abscheiden von mitgeführten Flüssigkeitströpfchen, die nicht bereits zuvor auf den gekrümmten Leitlamellen abgeschieden worden sind.

Die Fluideintrittseinrichtung besteht aus einer Blechkonstruktion, die sich weitgehend über die ganze Peripherie des Apparats erstreckt, so dass das Fluid mit relativ grossen Geschwindigkeiten der Teilströme in den Mittenbereich des Apparats eintritt. Im erzeugten Wirbel liegt daher eine relativ grosse Differenz des statischen Drucks zwischen dem Zentrum und der Peripherie vor. Ausserdem ergibt sich über dieser Einrichtung eine schlechte Querschnittsnutzung wegen einer weit ausgedehnten Totraumzone, die schwach durchströmt ist.

Eine weitere Eintrittseinrichtung ist aus der EP-A- 0 440 412 bekannt, mit der ein Fluidstrom in einem Ringkanal entlang der Peripherie des Apparats geführt und als Teilströme nach unten sowie von dort nach innen unter Ausbildung eines Wirbels verteilt werden kann.

Eine weitere Eintrittseinrichtung ist aus der US 4 336 228 bekannt, in welcher anstatt eines Ringkanals ein an der Innenwand einer Kolonne entlang einer Schraubenlinie verlaufendes Leitblech vorgesehen ist. Mittels des Leitblechs soll verhindert werden, dass an der Innenwand der Kolonne abgeschiedene Flüssigkeit mit dem Gasstrom mitgerissen wird. Das Fluid tritt durch eine Öffnung in die Kolonne ein, die allenfalls das Leitblech und eventuell noch ein Blechstück aufweist, das parallel zur Innenwand der Kolonne angebracht ist. Somit gelangt die Strömung vom Eintrittsrohr unter Ausbildung einer abrupten Querschnittsänderung in die Kolonne. In tangential an der Innenwand des Apparats angeordneten Eintrittseinrichtungen herrschen typischerweise sehr hohe Eintrittsgeschwindigkeiten von bis zu 100m/s, was sich günstig auf die Abscheidung von Tropfen auswirkt, allerdings entsteht durch die Führung des Fluids durch eine tangentiale Eintrittseinrichtung eine starke Wirbelströmung. Diese Wirbelströmung erzeugt eine Sekundärströmung, weil in dem Zentralbereich des Wirbels ein gegenüber den Randbereichen verminderter statischer Druck herrscht. Dieses Druckgefälle erzeugt eine Sogwirkung, sodass sich die Sekundärströmung vom Zentralbereich in den Randbereich richtet. Um diese Sekundärströmung auszugleichen, fliesst Fluid von einem Bereich unter oder über der Eintrittszone in den Zentralbereich des Wirbels, und dies umso schneller, je höher die Rotationsgeschwindigkeit des Wirbels ist. Die Folge ist eine asymmetrische Verteilung der vertikalen Strömungsgeschwindigkeit über den Querschnitt des Apparats, sodass im Randbereich des Apparats eine grosse Vertikalgeschwindigkeit vorherrscht, im Zentralbereich aber eine sehr kleine Vertikalgeschwindigkeit vorliegt, die sogar entgegengesetzt zur Vertikalgeschwindigkeit im Randbereich gerichtet sein kann. Die Abweichung der maximalen Vertikalgeschwindigkeit im Querschnitt von der mittleren Vertikalgeschwindigkeit ist umso ausgeprägter, je höher die Rotationsgeschwindigkeit des Wirbels ist. Für den Eintritt der Fluidströmung in stromabwärts der Eintrittszone gelegene zur Trennung oder dem Stoffaustausch dienende Einbauten, wie beispielsweise Packungen, ist eine derartige asymmetrische Verteilung sehr ungünstig, weil es zu einer starken Maldistribution in diesen Einbauten führt und sowohl deren Kapazität als auch deren Effizienz ungünstig beeinflusst. Eine Verzögerung, also eine Verringerung der Eintrittsgeschwindigkeit, kann mittels der vorbekannten Eintrittseinrichtung gemäss US 4 336 228 nicht oder allenfalls zu einem geringen Ausmass erzielt werden. Stromabwärts der Eintrittsöffnung koaleszieren Tropfen an der Wand und bilden einen Flüssigkeitsfilm, der durch Gravitation nach unten strömt. Dieser Film wird jedoch durch die Gasströmung erfasst und kann bei zu hoher Gasgeschwindigkeit nach oben umgelenkt werden, was mittels einem an der Behälterwand angeordneten spiralförmigen Leitbleich gemäss US 4 336 228 verhindert wird.

Ein anderer Ansatz besteht darin, zu grosse Gasgeschwindigkeiten an der Innenwand gänzlich zu vermeiden. Hierbei ist die Zielsetzung, die Vertikalgeschwindigkeit möglichst gleichmässig zu verteilen, was dadurch erreicht wird, dass die Rotationsbewegung verzögert wird. Hierzu werden in der US 2003 188 851 A1 Leitschaufeln vorgesehen. Ähnlich ausgestaltet ist die Eintrittsvorrichtung der US 4 315 815, welche einen an seiner Unterseite vollkommen offenen "Kanal" zeigt. In diesem Fall wird die unterhalb der Öffnung des Einlasses liegende Gasschicht mit dem eintretenden Fluid mitgerissen und ebenfalls angetrieben. Bei der Eintrittsvorrichtung gemäss US 4 315 815 bewirken die dort vorhandenen Leitbleche Verzögerungen durch Reibung. Dabei wird kaum Druck zurückgewonnen, sondern im Wesentlichen nur Energie dissipiert. Diese Anordnung ist nachteilig, da der Druck im Apparat spezifiziert ist und entsprechend geregelt werden muss. Um diesen Druckverlust auszugleichen ist es daher erforderlich, dass der eintretende Gasstrom einen höheren Druck aufweisen muss, wodurch der Apparat, von dem der Gasstrom herrührt, ebenfalls bei höherem Druck arbeiten muss. Neben dem damit verbundenen konstruktivem Mehraufwand und den Kostennachteilen ist die Anordnung der Leitbleche für eine Abscheidung irgendwelcher Tropfen nicht optimal. Abgeschiedene Flüssigkeit wird entlang der Leitbleche in beinahe horizontaler Richtung als Flüssigkeitsfilm gegen Ende des Kanalstücks getrieben. Da die Leitbleche inmitten des Gasstroms angeordnet sind, wird der Flüssigkeitsfilm an den am Ende des Kanalstücks liegenden Leitblechkanten wieder vom Gasstrom erfasst und erneut im Apparateraum verteilt bzw. versprüht.

Aufgabe der Erfindung ist es, eine Eintrittseinrichtung für ein tangential in einen Apparat einzuspeisendes Fluid, insbesondere ein Gas, zu schaffen, die gegenüber den bekannten hornförmigen Fluideintrittseinrichtungen eine verbesserte Einspeisung ermöglicht, wobei aus der sich stromabwärts der Eintrittseinrichtung ausbildenden Rotationsströmung Tröpfchen möglichst vollständig getrennt und abgeschieden werden sollen und gleichzeitig eine, bezogen auf den Apparatequerschnitt, möglichst gleichmässige Vertikalgeschwindigkeit stromabwärts der Eintrittseinrichtung erhalten werden, wobei insbesondere die Geschwindigkeiten in einem sich ausbildenden Wirbel reduziert sein sollen und eine verbesserte Querschnittsnutzung vorliegen soll.

Diese Aufgabe wird durch die im Anspruch 1 definierte Eintrittseinrichtung gelöst.

Mit der Eintrittseinrichtung für ein tangential in einen Apparat eingespeistes Fluid tritt nach Durchströmen eines hornförmigen Kanalstücks an einer Peripherie des Apparats das Fluid in eine Wirbelströmung ein. Die Wirbelströmung rotiert um eine Achse benachbart zu einer Zentralachse des Apparats. Die Zentralachse fällt mit einer Hauptrichtung des strömenden Fluids zusammen. Eine durchströmte Austrittszone des Kanalstücks gibt jeweils eine mittlere Strömungsrichtung des Fluids vor, welche sich entlang der Peripherie erstreckt und entgegen der genannten Hauptrichtung geneigt ist. Eine mittlere Zone des Kanalstücks - oder eine Eingangszone und die mittlere Zone - sowie die Austrittszone sind zusammen diffusorartig ausgebildet. Ein innerhalb des Apparats liegender sowie an die Perpherie anstossender Randbereich der diffusorartig ausgebildeten Zonen erstreckt sich über weniger als eine Hälfte, vorzugsweise weniger als ein Drittel der Peripherie. Durch die Ausbildung des Kanalstücks als Diffusor wird die Eintrittsgeschwindigkeit des Fluids verringert. Die Verzögerung der Fluidgeschwindigkeit im Kanalstück erfolgt unter weitgehender Rückgewinnung der Druckenergie, da der Diffuser derart ausgelegt ist, dass keine Strömungsablösungen auftreten, sodass Reibungsverluste weitestgehend vermieden werden und das Fluid durch die der Innenwand des Apparats folgende Krümmung des Diffusors in die oben beschriebene Rotationsbewegung eintritt. Diese Rotationsbewegung ist vorteilhaft um die im Fluidstrom vorhandenen Tropfen abzuscheiden. Insbesondere zur Trennung und Abscheidung kleiner Tropfen ist eine hohe Rotationsgeschwindigkeit vorteilhaft.

Fehlt dieser Diffusor oder ist der Kanal als offener Kanal ausgestaltet, ist eine derartige Verzögerung allenfalls in geringem Ausmass zu erwarten, was zur Folge hat, dass sich im Apparat eine starke Wirbelströmung stromabwärts der Eintrittseinrichtung ausbildet, was zu den in Zusammenhang mit dem Stand der Technik erwähnten Problemen führen kann. Die durch die Rotationsbewegung angeregte Wirbelströmung im Apparat wird durch die Verwendung des Diffusors derart verringert, dass eine gleichmässige Verteilung der Vertikalgeschwindigkeit bei Eintritt in einen oberhalb der Eintrittseinrichtung, also stromabwärts, liegenden Abschnitt des Apparats, erzielbar ist, wobei es sich bei dem Abschnitt beispielsweise um eine Packung handelt.

Die Abscheidung soll primär im Inneren des Kanalstücks erfolgen und allenfalls unmittelbar anschliessend, solange die Wirbelströmung noch im wesentlichen entlang der Wand verläuft. Da am Austritt des Kanalstücks die Strömungsgeschwindigkeit verzögert ist, kann der an der Innenwand des Apparats befindliche Flüssigkeitsfilm abfliessen, ohne von der Rotationsströmung wieder erfasst zu werden.

Stromabwärts des als Diffusor ausgebildeten Kanalstücks erfolgt eine Umlenkung der Wirbelströmung in Richtung des Zentralbereichs des Apparat, wozu zumindest ein Umlenkelement vorgesehen sein kann. Der Wirbel ist anschliessend durch diese Umlenkelemente derart beeinflussbar, dass ein Teil des Fluids in einem Zentralbereich des Apparates nach oben strömt.

Der an das Umlenkelement anschliessend erzeugte Wirbel im Apparat sollte nicht zu schnell sein und sogar abgebremst werden, weil die starke Rotationsströmung eine gleichmässige Vertikalgeschwindigkeit nach oben zumindest behindert, wenn nicht sogar verhindert. Das oder die Umlenkelemente können derart ausgestaltet sein, dass sie dazu beitragen, die Rotationsgeschwindigkeit zu verringern, sodass eine möglichst gleichmässige Vertikalgeschwindigkeit im Inneren des Apparats erzielt wird.

Die abhängigen Ansprüche 2 bis 9 betreffen vorteilhafte Ausführungsformen der erfindungsgemässen Eintrittseinrichtung für ein Fluid. Ein Apparat mit der erfindungsgemässen Fluideintrittseinrichtung ist Gegenstand der Ansprüche 10 und 11. Eine Verwendung dieser Eintrittseinrichtung ist Gegenstand des Anspruchs 12.

Nachfolgend wird die Erfindung anhand der Zeichnungen erläutert. Es zeigen:
- Fig. 1: eine erfindungsgemässe Eintrittseinrichtung in einem Apparat,
- Fig. 2: eine schematische Darstellung eines Innenraums desselben Apparats zur Illustration einer Wirbelströmung,
- Fig. 3: die Unterteilung in drei Teilkanäle der Eintrittseinrichtung, von ausserhalb des Apparats betrachtet, und
- Fig. 4: eine schematische Darstellung, die ein die Wirbelströmung beeinflussendes Umlenkelement zeigt.

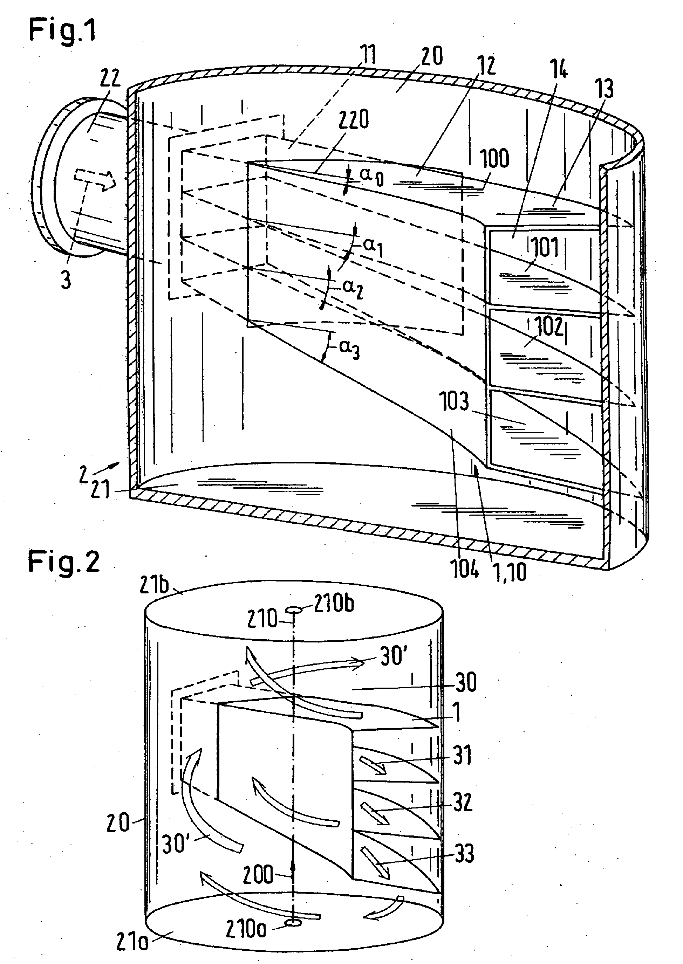

Mit einer erfindungsgemässen Eintrittseinrichtung 1, wie sie in den Figuren 1 und 2 dargestellt ist, wird ein Fluid 3 tangential in einen Apparat 2 eingespeist, der insbesondere eine Kolonne ist. Die schematische Darstellung in Fig. 2 zeigt von dem Apparat 2 einen Abschnitt des Innenraums, der durch eine Peripherie 20, einen unteren Querschnitt 21a und einen oberen Querschnitt 21b begrenzt ist. Der Mittelpunkt 210a des unteren Querschnitts 21a, der einem Boden 21 in Fig. 1 entspricht, wird durch eine Zentralachse 210 mit dem Mittelpunkt 210b des oberen Querschnitts 21b verbunden.

Das Fluid 3 durchströmt zuerst einen Anschlussstutzen 22 und anschliessend ein hornförmiges Kanalstück 10 an der Peripherie 20 des Apparats 2. Im Anschlussstutzen 22 geht die Querschnittsfläche von einer Kreisform in eine Rechteckform über. Das Fluid 3 verlässt das Kanalstück 10 durch eine Austrittszone 13 sowie eine Austrittsfläche 14 und tritt in eine durch Pfeile 30' angedeutete Wirbelströmung 30 ein. Diese Wirbelströmung 30 hat eine Rotationsachse, die sich benachbart zur Zentralachse 210 des Apparats 2 und geneigt oder parallel zu dieser erstreckt. Die Zentralachse 210 fällt mit einer Hauptrichtung 200 des strömenden Fluids 3 zusammen. Die Austrittszone 13 gibt eine mittlere Strömungsrichtung 32 des Fluids 3 bei der Austrittsfläche 14 vor, welche entlang, d.h. im Wesentlichen parallel zu einer Ebene verläuft, die eine Tangentialebene an die Peripherie 20 ist. Die mittlere Strömungsrichtung 32 ist entgegen der Hauptrichtung 200 geneigt und schliesst mit einer Ebene senkrecht zur Zentralachse 210 einen Winkel von maximal 30° ein. Der Boden 21 kann den Innenraum des Apparats 2 gegen unten abschliessen. An dieser Stelle kann sich auch die Oberkante eines darunter liegenden Packungsbettes, Trennbodens oder Verteilers befinden.

Eine Eingangszone 11 des Kanalstücks 10, eine mittlere Zone 12 sowie die Austrittszone 13 sind zusammen diffusorartig ausgebildet. Die Eingangszone 11 könnte auch eine konstant bleibende Querschnittsfläche aufweisen und würde daher nicht als Diffusor wirken. Ein Randbereich der diffusorartig ausgebildeten Zonen, der innerhalb des Apparats 2 liegt und an die Perpherie 20 anstösst, erstreckt sich über einen Teil der Peripherie 20, der vorzugsweise kleiner als ein Drittel der Peripherie 20 ist, um für die Wirbelströmung 30 genügend Raum zur Verfügung zu stellen. Der genannte Randbereich, der sich über die mittlere Zone 12 und die Austrittszone 13 erstreckt, könnte auch grösser sein, sollte jedoch nicht mehr als eine Hälfte der Peripherie 20 beanspruchen.

Das Kanalstück 10 ist im Bereich der diffusorartig ausgebildeten Zonen in eine Mehrzahl von diffusorartigen Teilkanälen, nämlich drei Teilkanäle unterteilt. Die Anzahl der Teilkanäle kann beispielsweise auch 2, 4 oder 5 sein. In diesen Teilkanälen sind - siehe Fig. 2 - Teilströme durch Pfeile 31, 32 und 33 angegeben. Die Pfeile entsprechen den jeweiligen mittleren Strömungsrichtungen (31,32,33) dieser Teilströme. Eine Begrenzung der diffusorartig ausgebildeten Zonen umfasst eine Wandung, die durch die Peripherie 20 sowie drei Wandstücke gebildet ist: ein erstes Wandstück 100 quer (senkrecht oder nahezu senkrecht), ein zweites Wandstück 104 gleich gerichtet und ein drittes Wandstück 103 geneigt zur Zentralachse 210. Bei einer vertikalen Ausrichtung der Zentralachse 210 sind diese drei Wandstücke 100, 104 und 103 ein oberes horizontales oder nahezu horizontales, ein vertikales bzw. ein unteres geneigtes Wandstück. Die drei diffusorartigen Teilkanäle sind durch zwei Wandstücke 101 und 102 gegeneinander getrennt.

Die Wandstücke 100, 101, 102 und 103 schliessen jeweils mit einer Horizontalen 220 Winkel α₀, α₁, α₂ bzw. α₃ ein, für die gilt α₀ < α₁ < α₂ < α₃. Beispielsweise ist α₀ gleich Null (d.h. das Wandstück 100 ist horizontal), und die weiteren Winkel unterscheiden sich jeweils um 5°. Diese Differenz kann etwas grösser (vorzugsweise) oder auch kleiner sein. Im Bereich des Kanalstücks 10 der diffusorartig ausgebildeten Zonen erweitern sich die Flächen der durchströmten Querschnitte um 20% bis 200%, vorzugsweise um 50% bis 150%. Bezogen auf den radialen Abstand zwischen Zentralachse 210 und Peripherie 20 beträgt die radiale Breite der Austrittsfläche 14 25% bis 80%, vorzugsweise 40% bis 60%. Damit eine Diffusorwirkung nicht durch Instabilitäten in Form einer fluktuierenden, teilabgelösten Strömung beeinträchtigt wird, dürfen sich die Querschnitte nur relativ langsam erweitern.

Kriterien für eine Strömungsstabilität in Diffusoren findet man beispielsweise in einem Lehrbuch von Walter Traupel, "Thermische Turbomaschinen" (Band 1, Seiten 139 - 141, 3. Auflage, Springer Verlag 1977).

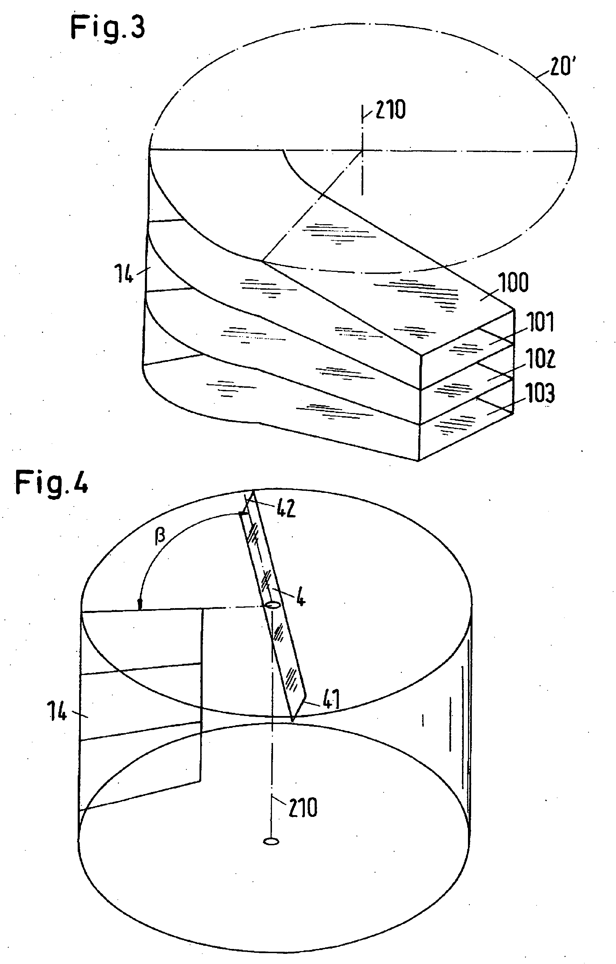

Die Fig. 3 zeigt die Unterteilung der erfindungsgemässen Eintrittseinrichtung 1 in drei Teilkanäle, wie sie dem Betrachter von ausserhalb des Apparats erscheint. Dabei ist die strichpunktiert gezeichnete Kurve 20' die Schnittlinie zwischen der Peripherie 20 und der horizontalen Ebene, in der das obere Wandstück 100 liegt. Eine entsprechende Darstellung ist in Fig. 4 gegeben, wobei von der Eintrittseinrichtung 1 nur die Austrittsfläche 14 dargestellt ist.
Fig. 4 betrifft ein Umlenkelement 4, mit dem die Wirbelströmung 30 günstig beeinflusst werden kann.

Das Umlenkelement 4 zur Beeinflussung der Strömung ist stromabwärts nach der Austrittszone 13 sowie zwischen der Zentralachse 210 und der Peripherie 20 vorgesehen. Dieses Umlenkelement 4 bildet zwischen einem Fussende 41 und einem Kopfende 42 einen Streifen, dessen Längserstreckung parallel zur Zentralachse 210 ist oder bis zu einem Winkel von 30° gegenüber dieser geneigt ist, wobei das Fussende 41 stromabwärts nach dem Kopfende 42 folgt. Mit Vorteil ist das Umlenkelement 4 an oder nahe bei der Wand des Apparats (Peripherie 20) befestigt. Die Befestigung erfolgt dabei längs einer Kante des Umlenkelements 4, welche der Längserstreckung des Streifens entspricht. Vorzugsweise wird ein Umlenkelement 4 eingesetzt, es können aber zwei oder mehrere solcher Umlenkelemente in gleichmässigen oder ungleichmässigen Abständen an der Peripherie 20 befestigt sein. Die Breite der Umlenkelemente kann variieren. Die Umlenkelemente können perforiert sein, damit daran nur ein Teil des Fluidstromes umgelenkt wird, der andere durch ein derartiges Umlenkelement hindurch strömen kann. Die Perforierung wird zum Beispiel mittels eines regelmässigen Musters von Löchern erzielt, wobei die frei werdende Fläche zwischen 5 und 60% des Umlenkelementes, bevorzugt zwischen 5 und 40% beträgt. Typische Lochdurchmesser liegen im Bereich von 12 mm, andere Dimensionen sind jedoch auch möglich. Die Verwendung einer Perforierung ist vorteilig, da ein Teil der Fluidströmung, welche durch das Blech abgelenkt und/oder gebremst wird, durch die Perforierungen weiter strömen kann und eine Rotationsbewegung ausführt, sodass der gesamte Apparatequerschnitt durchströmt wird.

Alternativ oder in Ergänzung dazu kann auch zumindest ein Längsschlitz auf zumindest einem Umlenkelement 4 vorgesehen sein. Der Längsschlitz kann insbesondere auch angrenzend zur Innenwand des Apparats vorgesehen sein, damit ein an der Innenwand abfliessender Flüssigkeitsfilm durch das Umlenkelement nicht behindert wird.

Die Austrittsfläche 14 der Ausgangszone 13 und das erste Umlenkelement 4 spannen einen Winkel β um die Zentralachse 210 auf, dessen Betrag zwischen 30° und 150° liegt. Der Winkel β beschreibt den Winkelabstand zwischen der Austrittsfläche 14 aus dem hornförmigen Kanalstück und dem Umlenkelement 4. Wenn das Umlenkelement 4 vertikal ist, ist dieser Winkel klar definiert. Ist das Umlenkelement nicht vertikal angeordnet, wird der Winkel in einer Ebene gemessen, welche die obere Kante des hornförmigen Kanalstücks enthält und normal zur Zentralachse 210 des Apparats ist. Der Winkel beschreibt den Winkelabstand zwischen dieser oberen Kante und dem Teil des Umlenkelements 4, welches von dieser Ebene geschnitten wird.

Zumindest eines der Umlenkelemente 4 weist eine angeströmte Fläche auf, die kleiner als das Doppelte der Austrittsfläche 14 der Ausgangszone 13 ist.

Je nach Durchmesser einer Kolonne (Apparat 2) und nach Menge des einzuspeisenden Fluids kann in einem Kolonnenabschnitt eine Mehrzahl der erfindungsgemässen Eintrittseinrichtungen 1 auf derselben oder verschiedenen, gegeneinander versetzten horizontalen Ebenen 220 angeordnet sein. Im Fall mit zwei Eintritten liegen diese vorzugsweise einander diametral gegenüber. Die beiden Eintrittseinrichtungen 1 können gegeneinander gerichtet sein, so dass die Fluide gegensinnig in den Apparat 2 einströmen; dann kann in der Regel auf das Umlenkelement 4 verzichtet werden.

Die erfindungsgemässe Eintrittseinrichtung 1 führt zu einer sehr guten Geschwindigkeitsverteilung, wie eine solche bei bekannten Einrichtungen mit tangentialem Fluideintritt nicht erreicht werden konnte. Möglich ist dies dank der diffusorartigen Ausbildung der Zuführkanäle und der dadurch bewirkten kontrollierten Verzögerung der Strömung. Durch den Einsatz eines Umlenkelements 4 ergibt sich eine zusätzliche Verbesserung der Geschwindigkeitsverteilung. Dank der peripheren Anordnung wird auch ein im Fluid mitgeführtes Kondensat mit guten Wirkungsgrad abgeschieden.

Die erfindungsgemässe Eintrittseinrichtung 1 mit dem hornförmigen Kanalstück 10 lässt sich zum Einspeisung und Verteilen eines Fluids verwenden. Das Fluid kann mehrphasig oder einphasig sein, insbesondere ein Gasstrom, der mit einer dichteren Phase, beispielsweise Flüssigkeitströpfchen, befrachtet ist, bzw. ein Gasstrom, der aus nur einem Stoff oder einem einphasigen Stoffgemisch besteht. Dabei ist in dem hornförmigen Kanalstück - im Fall eines zweiphasigen Fluids - eine disperse Phase höherer Dichte unter Nutzung deren Trägheit zumindest teilweise abscheidbar.

## Patentansprüche

1. Eintrittseinrichtung (1) für ein tangential in einen Apparat (2) eingespeistes Fluid (3), wobei das Fluid nach Durchströmen eines hornförmigen Kanalstücks (10) an einer Peripherie (20) des Apparats in eine Wirbelströmung (30) eintritt, die um eine Achse benachbart zu einer Zentralachse (210) des Apparats rotiert, die Zentralachse mit einer Hauptrichtung (200) des strömenden Fluids zusammen fällt und der Apparat insbesondere eine Kolonne ist,
wobei das Kanalstück (10) eine durchströmte Austrittszone (13) aufweistwelche sich entlang der Peripherie (20) des Apparats (2) erstreckt und entgegen der genannten Hauptrichtung (200) geneigt ist, wobei eine mittlere Zone (12) und die Austrittszone (13) des Kanalstücks (10) zusammen diffusorartig ausgebildet sind d.h. die durchströmten Querschnittflächen sich in Strömungsrichtung vergrößern und wobei ein innerhalb des Apparats liegender sowie an die Peripherie anstossender Randbereich der diffusorartig ausgebildeten Zonen sich über weniger als eine Hälfte, vorzugsweise weniger als ein Drittel der Peripherie erstreckt **dadurch gekennzeichnet, dass** das Kanalstück (10) im Bereich der diffusorartig ausgebildeten mittleren Zone (12) und der Austrittszone (13) in eine Mehrzahl von diffusorartigen Teilkanälen unterteilt ist, wobei in der Austrittszone (13) jedes Teilkanals jeweils eine mittlere Strömungsrichtung (31,32,33) des Fluids vorgegeben ist.

2. Eintrittseinrichtung nach Anspruch 1, wobei eine Eingangszone (11) des Kanalstücks (10) diffusorartig ausgebildet ist.

3. Eintrittseinrichtung nach Anspruch 1, **dadurch gekennzeichnet, dass** stromabwärts nach der Austrittszone (13) sowie zwischen der Zentralachse (210) und der Peripherie (20) mindestens ein Umlenkelement (4) zur Beeinflussung der Wirbelströmung (30) vorgesehen ist und dass insbesondere das Umlenkelement zwischen einem Fussende (41) und einem Kopfende (42) einen Streifen bildet, dessen Längserstreckung parallel zur Zentralachse ist oder bis zu einem Winkel von 30° gegenüber dieser und gegen die Wirbelströmung geneigt ist, wobei das Fussende stromabwärts nach dem Kopfende folgt.

4. Eintrittseinrichtung nach Anspruch 3, **dadurch gekennzeichnet, dass** zumindest ein Umlenkelement (4) eine Perforierung und/oder zumindest einen Schlitz aufweist.

5. Eintrittseinreichtung nach Anspruch 4, wobei die Perforierungen und/oder Schlitze als Öffnungen ausgestaltet sind, die einen Anteil von von 5% bis 60%, bevorzugt 5 bis 40% an der Fläche des Umlenkelements aufweisen.

6. Eintrittseinrichtung nach einem oder Ansprüche 3 bis 5 **dadurch gekennzeichnet, dass** durch eine Austrittsfläche (14) der Ausgangszone (13) und durch das erste Umlenkelement (4) ein Winkel (β) um die Zentralachse (210) aufgespannt ist, dessen Betrag zwischen 30° und 150° liegt.

7. Eintrittseinrichtung nach einem der vorhergehenden Ansprüche **dadurch gekennzeichnet, dass** im Bereich des Kanalstücks 10 der diffusorartig ausgebildeten Zonen die Flächen der durchströmten Querschnitte sich um 20% bis 200%, vorzugsweise um 50% bis 150% erweitern.

8. Eintrittseinrichtung nach einem der vorhergehenden Ansprüche, **dadurch gekennzeichnet, dass** eine Begrenzung der diffusorartig ausgebildeten Zonen eine Wandung umfasst, die durch die Peripherie (20) sowie drei Wandstücke gebildet ist: ein erstes Wandstück (100) quer, ein zweites (104) gleich gerichtet und ein drittes (103) geneigt zur Zentralachse (210), wobei insbesondere bei einer vertikalen Ausrichtung der Zentralachse diese drei Wandstücke ein oberes horizontales, ein vertikales bzw. ein unteres geneigtes Wandstück sind.

9. Eintrittseinrichtung nach einem der vorhergehenden Ansprüche, **dadurch gekennzeichnet, dass**, bezogen auf den radialen Abstand zwischen Zentralachse (210) und Peripherie (20), die radiale Breite der Austrittszone (13) an deren Austrittsfläche (14) 25% bis 80%, vorzugsweise 40% bis 60% beträgt.

10. Apparat (2), insbesondere Kolonne, mit mindestens einer Eintrittseinrichtung (1) für ein tangential in den Apparat einzuspeisendes Fluid (3) gemäss einem der Ansprüche 1 bis 9.

11. Kolonne oder Apparat nach Anspruch 10, **dadurch gekennzeichnet, dass** in einem Kolonnenabschnitt zwei oder mehr Eintrittseinrichtungen, vorzugsweise bis zu drei, auf einer oder auf versetzten Ebenen (220) mit gleich- oder gegensinniger Orientierung angeordnet sind.

12. Verwendung einer Eintrittseinrichtung (1) mit einem hornförmigen Kanalstück (10) gemäss einem der Ansprüche 1 bis 9 zwecks Einspeisung und Verteilen eines Fluids (3), das mehrphasig oder einphasig ist, insbesondere eines Gasstroms, der mit einer dichteren Phase, beispielsweise Flüssigkeitströpfchen, befrachtet ist bzw. der aus nur einem Stoff oder einem einphasigen Stoffgemisch besteht,
wobei in dem hornförmigen Kanalstück - im Fall eines zweiphasigen Fluids - eine disperse Phase höherer Dichte unter Nutzung deren Trägheit zumindest teilweise abscheidbar ist.

## Claims

1. An inlet device (1) for a fluid (3) fed tangentially into an apparatus (2), with the fluid entering into a vortex flow (30) after flowing through a horn-shaped passage piece (10) at a periphery (20) of the apparatus, said vortex flow rotating around an axis adjacent to a central axis (210) of the apparatus, with the central axis coinciding with a main direction (200) of the flowing fluid and the apparatus in particular being a column,
wherein the horn-shaped passage piece (10) has a discharge zone (13) through which flow takes place which extends along the periphery (20) of the apparatus (2) and is inclined against the said main direction (200); in that a middle zone (12) and the discharge zone of the horn-shaped passage piece (10) are together made in the manner of a diffuser, that means the surfaces of the cross-sections through which flow takes place expand in the direction of fluid flow and whereby a marginal region of the zones made in the manner of a diffuser lying inside the apparatus and abutting the periphery extends over less than one half of the periphery,
preferably over less than one third of the periphery, **characterised in that** the horn-shaped passage piece (10) is divided in the region of the middle zone (12) which is shaped in the manner of a diffusor and the discharge zone (13) into a plurality of part passages, which are shaped in the manner of a diffusor , whereby in the discharge zone (13) of each part passage, a middle flow direction (31, 32, 22) of the flow is prescribed.

2. An inlet device in accordance with claim 1, wherein the inlet zone (11) of the horn-shaped passage piece is shaped in the manner of a diffusor.

3. An inlet device in accordance with claim 1, **characterised in that** at least one deflection member (4) for the influencing of the vortex flow (30) is provided downstream after the discharge zone (13) and between the central axis (210) and the periphery (20); and **in that** the deflection member in particular forms a strip between a foot end (41) and a head end (42), the longitudinal extent of said strip being parallel to the central axis or being inclined up to an angle of 30° with respect to it and against the vortex flow, with the foot end following downstream after the head end.

4. An inlet device in accordance with claim 3, **characterised in that** at least one deflection member (4) is disposed with a perforation and/or a longitudinal slit.

5. An inlet device according to claim 4, **characterised in that** the perforations and/or longitudinal slits are shaped as openings, which constitute a portion of the area of the deflection member of about 5 to 60%, preferably of about 5 to 40%.

6. An inlet device in accordance at least one of the claims 3 to 5,
**characterised in that** an angle (β) is set up around the central axis (210) by a discharge surface (14) of the discharge zone (13) and by the first deflection member (4) whose amount lies between 30° and 150°.

7. An inlet opening in accordance with any one of the preceding claims, **characterised in that** the surfaces of the cross-sections through which flow takes place expand in the region of the passage piece 10 of the zones made in the manner of a diffuser by 20% to 200%, preferably by 50% to 150%.

8. An inlet device in accordance with any one of the preceding claims, **characterised in that** a boundary of the zones made in the manner of a diffuser includes a wall which is formed by the periphery (20) and three wall pieces: a first wall piece (100) transverse to the central axis (210), a second wall piece (104) in the same alignment and a third wall piece (103) inclined thereto, with these three wall pieces in particular being an upper horizontal, a vertical or a lower inclined wall piece on a vertical alignment of the central axis.

9. An inlet device in accordance with any one of the preceding claims, **characterised in that**, related to the radial spacing between the central axis (210) and the periphery (20), the radial width of the discharge zone (13) at its discharge surface (14) amounts to 25% to 80%, preferably 40% to 60%.

10. An apparatus (2), in particular a column, having at least one inlet device (1) for a fluid (3) to be fed into the apparatus tangentially in accordance with any one of the claims 1 to 9.

11. A column or apparatus in accordance with claim 10, **characterised in that** two or more inlet devices, preferably up to three inlet devices, are arranged in a column section on one plane or on offset planes (220) with a same or opposite sense of orientation.

12. Use of an inlet device (1) having a horizontal passage piece (10) in accordance with any one of the claims 1 to 9 for the feeding in and distribution of a fluid (3), which is multiphase or single-phase, in particular of a gas flow which is loaded with a denser phase, for example liquid droplets, or only consists of one substance or of a single-phase substance mixture, with a dispersed phase of higher density being at least partly separable utilising its inertia in the horn-shaped passage piece in the case of a two-phase fluid.

## Revendications

1. Dispositif d'entrée (1) pour un fluide (3) alimenté de façon tangentielle dans un appareil (2), dans lequel le fluide, après avoir traversé un tronçon de canal (10) en forme de corne, entre au niveau d'une périphérie (20) de l'appareil dans un courant tourbillonnaire (30) tournant autour d'un axe à proximité d'un axe central (210) de l'appareil, l'axe central coïncidant avec une direction principale (200) du fluide courant et l'appareil étant en particulier une colonne,
dans lequel le tronçon de canal (10) présente une zone de sortie (13) traversée qui s'étend le long de la périphérie (20) de l'appareil (2) et est inclinée en sens inverse de ladite direction principale (200), une zone centrale (12) et la zone de sortie (13) du tronçon de canal (10) étant réalisées ensemble à la manière d'un diffuseur, c'est-à-dire que les superficies de section traversées augmentent dans la direction du courant, et dans lequel une zone marginale située à l'intérieur de l'appareil et adjacente à la périphérie des zones réalisées à la manière d'un diffuseur s'étend sur moins d'une moitié, de préférence moins d'un tiers de la périphérie,
**caractérisé en ce qu'**au niveau de la zone centrale (12) réalisée à la manière d'un diffuseur et de la zone de sortie (13), le tronçon de canal (10) est divisé en une pluralité de canaux partiels à la manière d'un diffuseur, respectivement une direction de courant centrale (31, 32, 33) du fluide étant spécifiée dans la zone de sortie (13) de chaque canal partiel.

2. Dispositif d'entrée selon la revendication 1, dans lequel une zone d'entrée (11) du tronçon de canal (10) est réalisée à la manière d'un diffuseur.

3. Dispositif d'entrée selon la revendication 1, **caractérisé en ce qu'**en aval après la zone de sortie (13) ainsi qu'entre l'axe central (210) et la périphérie (20) au moins un élément déflecteur (4) est prévu pour affecter le courant tourbillonnaire (30), et **en ce qu'**en particulier l'élément déflecteur forme entre une extrémité de pied (41) et une extrémité de tête (42) une bande dont l'extension longitudinale est parallèle à l'axe central ou est inclinée jusqu'à un angle de 30° par rapport à celui-ci et par rapport au courant tourbillonnaire, l'extrémité de pied se trouvant en aval après l'extrémité de tête.

4. Dispositif d'entrée selon la revendication 3, **caractérisé en ce qu'**au moins un élément déflecteur (4) présente une perforation et/ou au moins une fente.

5. Dispositif d'entrée selon la revendication 4, dans lequel les perforations et/ou fentes sont configurées comme des ouvertures qui présentent une proportion de 5 % à 60 %, de préférence de 5 à 40 %, de la superficie de l'élément déflecteur.

6. Dispositif d'entrée selon l'une quelconque des revendications 3 à 5, **caractérisé en ce qu'**une surface de sortie (14) de la zone de sortie (13) et le premier élément déflecteur (4) fixent un angle (β) autour de l'axe central (210) dont la grandeur se situe entre 30° et 150°.

7. Dispositif d'entrée selon l'une quelconque des revendications précédentes, **caractérisé en ce qu'**au niveau du tronçon de canal (10) des zones réalisées à la manière d'un diffuseur, les superficies des sections transversales traversées s'élargissent de 20 % à 200 %, de préférence de 50 % à 150 %.

8. Dispositif d'entrée selon l'une quelconque des revendications précédentes, **caractérisé en ce qu'**une délimitation des zones réalisées à la manière d'un diffuseur comprend une paroi qui est formée par la périphérie (20) ainsi que par trois segments de paroi: un premier segment de paroi (100) perpendiculaire, un deuxième (104) parallèle et un troisième (103) incliné par rapport à l'axe central (210), dans lequel en particulier pour une orientation verticale de l'axe central, ces trois segments de paroi correspondent respectivement à un segment de paroi horizontal supérieur, un segment de paroi vertical ou un segment de paroi incliné inférieur.

9. Dispositif d'entrée selon l'une quelconque des revendications précédentes, **caractérisé en ce qu'**en se référant à la distance radiale entre l'axe central (210) et la périphérie (20), la largeur radiale de la zone de sortie (13) est de 25 % à 80 %, de préférence de 40 % à 60 %, au niveau de sa surface de sortie (14).

10. Appareil (2), en particulier colonne, comprenant au moins un dispositif d'entrée (1) pour un fluide (3) à alimenter de façon tangentielle dans l'appareil selon l'une quelconque des revendications 1 à 9.

11. Colonne ou appareil selon la revendication 10, **caractérisé**(e) en ce que dans une portion de colonne, deux ou plusieurs, de préférence jusqu'à trois, dispositifs d'entrée sont disposés sur un niveau ou sur des niveaux décalés (220) avec une orientation dans le même sens ou en sens inverse.

12. Utilisation d'un dispositif d'entrée (1) avec un tronçon de canal (10) en forme de corne selon l'une quelconque des revendications 1 à 9 en vue d'alimenter et de distribuer un fluide (3) qui est polyphasé ou monophasé, en particulier un courant de gaz chargé d'une phase plus dense, par exemple de gouttelettes de liquide, ou qui se compose d'une seule substance ou d'un mélange de substances monophasé, dans laquelle dans le tronçon de canal en forme de corne - dans le cas d'un fluide biphasé - une phase en dispersion de densité supérieure peut être déposée au moins en partie en exploitant son inertie.
